(19) Europäisches Patentamt
European Patent Office
Office européen des brevets

(11) Numéro de publication : **0 647 702 A1**

(12) **DEMANDE DE BREVET EUROPEEN**

(21) Numéro de dépôt : **94402126.0**

(22) Date de dépôt : **23.09.94**

(51) Int. Cl.$^6$ : **C10M 137/08,** C10M 137/04, C10M 153/04, // C10N30:06

(30) Priorité : **06.10.93 FR 9311987**

(43) Date de publication de la demande : **12.04.95 Bulletin 95/15**

(84) Etats contractants désignés : **BE CH DE ES GB IT LI LU NL**

(71) Demandeur : **INSTITUT FRANCAIS DU PETROLE**
**4, Avenue de Bois Préau**
**F-92502 Rueil-Malmaison (FR)**

(72) Inventeur : **Denis, Jacques**
**Les chênes,**
**18 Chemin Grandes Bryères**
**F-69260 Charbonnieres les bains (FR)**
Inventeur : **Garapon, Jacques**
**120, Rue Mazenod**
**F-69005 Lyon (FR)**
Inventeur : **Born, Maurice**
**74 Rue du Vieux-Pont**
**F-92000 Nanterre (FR)**
Inventeur : **Dixmier, Françoise**
**25 Rue Mozart**
**F-92300 Sceaux (FR)**

(54) **Compositions lubrifiantes contenant un phosphate d'amine comportant un cycle imide terminal.**

(57) Composition lubrifiante comprenant une proportion majeure d'huile lubrifiante et une proportion mineure d'au moins un phosphate d'amine comportant un cycle imide terminal résultant de la réaction, dans des conditions de formation d'un sel d'amine, d'au moins un phosphate répondant à la formule générale (I) :

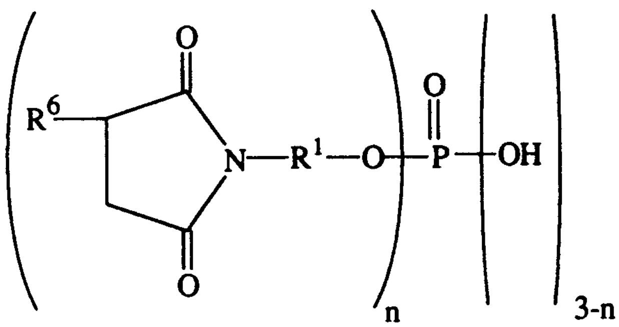

dans laquelle n est égal à 1 ou 2, $R^1$ est un groupe hydrocarboné divalent ayant de 1 à 32 atomes de carbone, $R^6$ représente un atome d'hydrogène ou un groupe hydrocarboné monovalent ayant habituellement de 1 à 200 atomes de carbone, avec au moins une amine.

EP 0 647 702 A1

La présente invention concerne des compositions d'huiles lubrifiantes comprenant une proportion majeure d'huile lubrifiante (minérale ou synthétique) et une proportion mineure d'au moins un phosphate d'amine comportant au moins un cycle imide terminal.

Lorsque les huiles lubrifiantes sont destinées à lubrifier des organes soumis à des contraintes mécaniques importantes, il est habituel d'ajouter dans ces huiles une proportion mineure d'au moins un composé, dit additif anti-usure et extrême-pression, permettant de réduire sensiblement la détérioration des mécanismes ou des outils. Les huiles contenant au moins un additif anti-usure et extrême-pression sont habituellement employées au niveau de la distribution dans les moteurs thermiques, des engrenages, des roulements ou des butées. Ces huiles additivées sont également utilisées lors de l'usinage des métaux, qu'il s'agisse de coupe ou de formage. Ces huiles dopées ou additivées, outre leur emploi comme huiles de moteurs, peuvent aussi servir de fluides hydrauliques et de fluides de transmission.

On a maintenant découvert, de façon surprenante, que les phosphates d'amines décrits ci après et dont certains ont été décrits par la demanderesse dans la demande de brevet français déposée le 9 Octobre 1992 sous le numéro d'enregistrement national EN 92/12 277 sont de bons additifs anti-usure et extrême-pression pour les huiles lubrifiantes.

D'une manière générale, la présente invention concerne des compositions d'huiles lubrifiantes comprenant une proportion majeure d'huile lubrifiante et une proportion mineure d'au moins un phosphate d'amine comportant un cycle imide terminal consistant en un produit résultant de la réaction, dans des conditions de formation d'un sel d'amine par neutralisation d'au moins une fonction acide, d'au moins un phosphate répondant à la formule générale (I) ci-après, par au moins une amine répondant à la formule générale (II) ou (III) ci-après. Les phosphates répondent à la formule générale (I) :

(I) 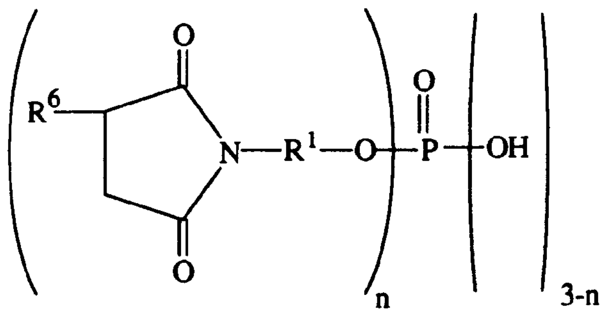

dans laquelle n est égal à 1 ou 2, $R^1$ est un groupe hydrocarboné divalent ayant de 1 à 32 atomes de carbone, $R^6$ représente un atome d'hydrogène ou un groupe hydrocarboné divalent ayant habituellement de 1 à 200 atomes de carbone. Le plus souvent $R^1$ est un groupe aliphatique saturé divalent, linéaire ou ramifié. Ce groupe comporte le plus souvent de 1 à 18 atomes de carbone et de préférence de 2 à 18 atomes de carbone ou un groupe aromatique, comportant éventuellement des substituants comme par exemple des groupes alkyles, et notamment alkyles inférieurs ; ce groupe aromatique comporte le plus souvent de 6 à 24 atomes de carbone et de préférence de 6 à 18 atomes de carbone. Ce groupe $R^1$ est de préférence un groupe aliphatique saturé divalent et comporte le plus souvent de 2 à 16 atomes et soit est linéaire, soit comporte des ramifications sous forme de groupes alkyles inférieurs tels que des groupes méthyles, éthyles, propyles ou butyles et de préférence des groupes méthyles ou éthyles.

Les amines employées pour former les phosphates d'amine utilisés dans les compositions selon la présente invention répondent à la formule générale (II) ou à la formule générale (III) :

(II) 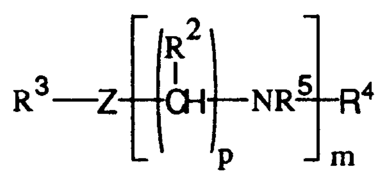

$$(III)\quad R^3-\underset{\underset{R^7}{|}}{N}-D-\left(O-E\right)_a-\left(O-F\right)_b-\left(O-G\right)_c-NH_2$$

dans lesquelles $R^3$, $R^4$ et $R^5$, identiques ou différents, représentent chacun un atome d'hydrogène ou un groupe hydrocarboné monovalent ayant de 1 à 60 et de préférence de 1 à 48 atomes de carbone, Z est choisi parmi les groupes -O-, et $-NR^7-$ dans lesquels $R^7$ représente un atome d'hydrogène ou groupe hydrocarboné monovalent ayant de 1 à 60 et de préférence de 1 à 48 atomes de carbone, $R^3$ et $R^7$ dans la formule (III), pouvant former ensemble avec l'atome d'azote auquel ils sont liés, un hétérocycle, chacun des groupes $R^2$ indépendamment représente un atome d'hydrogène ou un groupe hydrocarboné monovalent ayant de 1 à 4 atomes de carbone ; lorsque Z est $-NR^7$ -, p est un nombre entier supérieur ou égal à 2, de préférence un nombre de 2 à 10 et m est zéro ou un nombre de 1 à 10 ; lorsque Z est -O- , p est un nombre entier supérieur ou égal à 1, de préférence de 1 à 10 et m est un nombre entier de 1 à 10 ; D, E, F et G, identiques ou différents, représentent chacun un groupe hydrocarboné divalent ayant de 2 à 6 atomes de carbone, a est un nombre entier de 1 à 60, b et c, identiques ou différents, sont chacun zéro ou un nombre entier de 1 à 50 et la somme a + b + c est un nombre entier de 1 à 60.

Parmi les amines utilisées le plus souvent, on peut citer celles de formule (II) dans lesquelles m est égal à zéro. Ces monoamines répondent à la formule générale $R^3R^4R^7N$ et on utilise souvent celles dans lesquelles $R^4$ et $R^7$ représentent chacun un atome d'hydrogène et $R^3$ un groupe alkyle ayant de 1 à 32 atomes de carbone. A titre d'exemples de ces monoamines primaires, on peut citer la méthylamine, l'éthylamine, la propylamine, la butylamine, la pentylamine, l'hexylamine, l'heptylamine, l'octylamine, la nonylamine, la décylamine, la dodécylamine, la tétradécylamine, l'hexadécylamine, l'octadécylamine, l'eicosylamine et docosylamine. On peut également utiliser un mélange de monoamines primaires. On utilise fréquemment des monoamines secondaires de formule $R^3R^4NH$ dans laquelle $R^3$ et $R^4$, identiques ou différents, représentent chacun un groupe alkyle ayant de 1 à 32 atomes de carbone ou un mélange de monoamines secondaires tel que par exemple les coupes d'amines grasses de formules $R^3R^4NH$ dont les groupes $R^3$ et $R^4$ sont des radicaux hydrocarbonés aliphatiques monovalents en $C_8$, $C_{10}$, $C_{12}$, $C_{14}$, $C_{16}$, $C_{18}$, $C_{20}$ et $C_{22}$, en proportions molaires approximatives données dans le tableau I ci-après. A titre d'exemple on peut citer la coupe commerciale Noram 2SH vendue par la société CECA dans laquelle $R^3$ et $R^4$ sont définis comme dans la coupe P du Tableau I.

On peut également employer des polyamines de formule (II) dans lesquelles $R^3$ est un atome d'hydrogène ou un groupe hydrocarboné monovalent ayant de 1 à 32 atomes de carbone, Z est de préférence un groupe $-NR^7$ - dans lequel $R^7$ représente de préférence un atome d'hydrogène ou un groupe hydrocarboné monovalent ayant de 1 à 32 atomes de carbone, chacun des groupes $R^2$ indépendamment représente de préférence un atome d'hydrogène ou un groupe méthyle, p est un nombre entier de 2 à 4 et lorsque Z est un groupe $-NR^7-$, m est de préférence un nombre entier de 1 à 5.

Parmi les composés de formules (II) ci-devant, on peut employer ceux dans lesquels Z est $-NR^7-$, $R^3$, $R^2$ et $R^7$ représentant chacun un atome d'hydrogène, p est égal à 2 et m est un nombre entier de 1 à 5, ou ceux dans lesquels $R^3$ représente un groupe hydrocarboné monovalent ayant de préférence de 5 à 24 atomes de carbone, Z représente un groupe $-NR^7-$ dans lequel $R^7$ est un atome d'hydrogène, $R^2$ représente un atome d'hydrogène, p est un nombre entier de 2 à 4, de préférence 3, et m est un nombre entier de 1 à 5, de préférence 1.

Les groupes hydrocarbonés $R^3$ et $R^7$ sont habituellement des groupes alkyles, alcényles, linéaires ou ramifiés, aryles, aryl-alkyles (aralkyles), alkyl-aryles (alkaryles) ou cycloaliphatiques. Les groupes $R^3$ et $R^7$ sont de préférence des groupes alkyles ou alcényles, linéaires ou ramifiés. Le groupe hydrocarboné $R^2$ est habituellement un groupe alkyle de préférence linéaire et par exemple méthyle, éthyle, n-propyle ou n-butyle.

Comme composés spécifiques on peut citer : l'éthylènediamine, la propylènediamine, la triéthylènetétramine, la tripropylènetétramine, la tétraéthylènepentamine, la trimélhylènediamine, l'hexaméthylènediamine, les triméthyl-2,2,4 et -2,4,4 hexaméthylène diamine, la di(triméthylène)triamine, les N-alkyl diamino-1,3 propane par exemple le N-dodécyldiamino-1,3 propane, le N-tétradécyldiamino-1,3 propane, le N-hexadécyldiamino-1,3 propane, le N-octadécyldiamino-1,3 propane, le N-éicosyldiamino-1,3 propane et le N-docosyldiamino-1,3 propane ; on peut également citer les N-alkyldipropylène triamines par exemple la N-hexadécyldipropylène triamine, la N-octadécyldipropylène triamine, la N-éicosyldipropylène triamine et la N-docosyldipropylène triamine ; on peut également citer les N-alcényldiamino-1,3 propane et les N-alcényldipropylène triamines par exemple le N-octadécényldiamino-1,3 propane, le N-hexadécényldiamino-1,3 propane, le N-dodécylényldiamino-1,3 propane, le N-octadécadiényldiamino-1,3 propane et le N-docosényldiamino-1,3 propane. On peut citer à titre d'exemples de diamines N, N disubstituées, le N, N-diéthyl diamino-1,2 éthane, le N, N-diisopropyl

diamino-1,2 éthane, le N, N-dibutyl diamino-1,2 éthane, le N, N-diéthyl diamino-1,4 butane, le N, N-diméthyl diamino-1,3 propane, le N, N-diéthyl diamino-1,3 propane, le N, N-dioctyl diamino-1,3 propane, le N, N-didécyl diamino-1,3 propane, le N,N-didodécyl diamino-1,3 propane, le N, N-ditétradécyl diamino-1,3 propane, le N, N-dihexadécyl diamino-1,3 propane, le N, N-dioctadécyl diamino-1,3 propane, la N, N-didodécyldipropylène triamine, la N, N-ditétradécyldipropylène triamine, la N, N-dihexadécyldipropylène triamine, la N, N-dioctadécyldipropylène triamine, le N-méthyl, N-butyl-diamino-1,2 éthane, le N-méthyl, N-octyl-diamino-1,2 éthane, le N-éthyl,-N-octyl-diamino-1,2 éthane, le N-méthyl, N-décyl-diamino-1,2 éthane, le N-méthyl, N-dodécyl-diamino 1,3 propane, le N-méthyl, N-hexadécyl-diamino-1,3 propane et le N-éthyl, N-octadécyl-diamino-1,3 propane.

A titre d'exemples d'étheramines, on peut citer la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'éicosyloxy-3 propylamine, la docosyloxy-3 propylamine, le N-(octyloxy-3 propyl)diamino-1,3 propane, le N-(décyloxy-3 propyl)diamino-1,3 propane, la (triméthyl-2,4,6 décyl)oxy-3 propylamine, le N-[(triméthyl-2,4,6 décyl)oxy-3 propyl ] diamino-1,3 propane, la di-(méthoxy-2 éthyl-) amine, la di-(méthoxy-3 n-propyl-) amine, la di-(méthoxy-2 méthyl-2 éthyl-) amine, la di-(éthoxy-3 n-propyl-) amine, la di-(n-propoxy-3 n-propyl-) amine, la di-(n-butoxy-3 n-propyl-) amine, la di-(n-pentoxy-3 n-propyl-) amine, la di-(n-hexyloxy-3 n-propyl-) amine, la di-(n-octyloxy-3 n-propyl-) amine, la di-(n-nonyloxy-3 n-propyl-) amine, et la di-(n-décyloxy-3 n-propyl-) amine.

Il doit être entendu qu'il est possible de mettre en jeu comme composé aminé un ou plusieurs composés répondant à la formule (II) et/ou (III). Comme exemples spécifiques de mélange de composés répondant à la formule (II) on peut citer :
les coupes de diamines grasses répondant à la formule $R^3\text{-NH-(-CH}_2\text{-)}_3\text{-NH}_2$ dont les groupes $R^3$ sont des radicaux hydrocarbonés aliphatiques en $C_8$, $C_{10}$, $C_{12}$, $C_{14}$, $C_{16}$, $C_{18}$, $C_{20}$ et $C_{22}$, en proportions molaires approximatives données dans le tableau I ci-après.

## TABLEAU I

| chaînes alkyles / Coupe | $C_8$ | $C_{10}$ | $C_{12}$ | $C_{14}$ | $C_{16}$ | $C_{18}$ | $C_{18\text{-}1}$* | $C_{20}$ | $C_{22}$ |
|---|---|---|---|---|---|---|---|---|---|
| J | 0 % | 0 % | 0 % | 1 % | 28 % | 71 % | 0 % | 0 % | 0 % |
| K | 0 % | 0 % | 0 % | 1 % | 5 % | 42 % | 0 % | 12 % | 40 % |
| L | 3 % | 6 % | 56 % | 18 % | 10 % | 2 % | 5 % | 0 % | 0 % |
| M | 0 % | 0 % | 0 % | 0 % | 16 % | 4,9 % | 79,1 % | 0 % | 0 % |
| N | 0 % | 0 % | 0 % | 2,3 % | 31,8 % | 24,2 % | 39 % | 2,7 % | 0 % |
| P | 0 % | 0 % | 0 % | 0 % | 35 % | 62 % | 3 % | 0 % | 0 % |

*$C_{18\text{-}1}$ chaîne comportant une insaturation éthylénique.

Les polyamines de formules (III) employées sont le plus souvent celles dans lesquelles $R^3$ et $R^7$ représentent chacun un atome d'hydrogène, D, E, F et G, identiques ou différents, représentent chacun un groupe alkylène ayant de 2 à 4 atomes de carbone par exemple éthylène, triméthylène, méthyléthylène, tétraméthylène, méthyltriméthylène, méthyl-1 triméthylène et méthyl-2 triméthylène, a est un nombre entier de 1 à 60 et b et c sont égaux à zéro, ou a est un nombre entier de 1 à 59, c est zéro ou un nombre entier tel que la somme a + c soit de 1 à 59 et b est un nombre entier de 1 à 50, avec dans chaque cas la somme a + b + c égale à un nombre entier de 1 à 60.

Comme composés spécifiques de formule (III) on peut citer ceux répondant aux formules :

(III1) 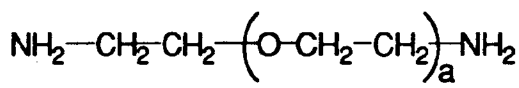

(III2) 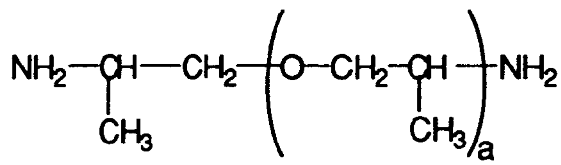

dans lesquelles a est 2, 3, 5, 6 ou environ 33; et

(III3) 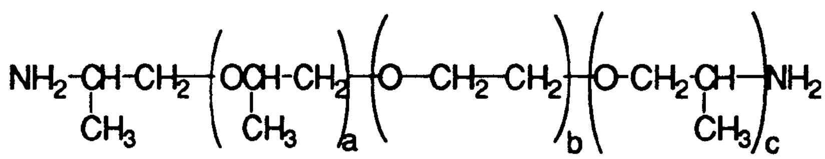

dans laquelle b est environ égal à 8, 9, 15, 16 ou 40 et a + c est environ 2 ou 3.

Ces produits sont en particulier commercialisés par la société TEXACO Chemical sous le nom Jeffamine EDR 148 pour le produit de formule (III1) dans laquelle a = 2, Jeffamine D-230 pour un produit de formule (III2) de masse moléculaire moyenne en nombre de 230, Jeffamine D-400 pour un produit de formule (III2) de masse moléculaire moyenne en nombre de 400, Jeffamine D-2 000 pour un produit de formule (III2) de masse moléculaire moyenne en nombre de 2 000, Jeffamine ED-600 pour un produit de formule (III3) de masse moléculaire moyenne en nombre de 600, Jeffamine ED-900 pour un produit de formule (III3) de masse moléculaire moyenne en nombre de 900 et Jeffamine ED-2 001 pour un produit de formule (III3) de masse moléculaire moyenne en nombre de 2 000.

Les phosphates de formule générale (I) sont des composés qui peuvent être préparés par toute méthode bien connue de l'homme du métier. Ces phosphates peuvent en particulier être obtenus par réaction de l'anhydride phosphorique de formule $P_2O_5$ sur un imide alcool de formule générale (IV) :

(IV) 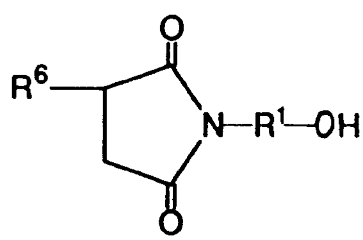

dans laquelle $R^1$ et $R^6$ ont la définition donnée ci-devant. Cet imide alcool de formule générale (IV) peut être obtenu par toute méthode bien connue de l'homme du métier. En particulier ce composé résulte de la réaction, dans des conditions classiques de formation d'un cycle imide, d'un acide, d'un hemi-ester d'alkyle léger de cet acide (hemi-ester de méthyle, d'éthyle, de propyle ou de butyle) ou de préférence d'un anhydride succinique de formule (V) :

(V) 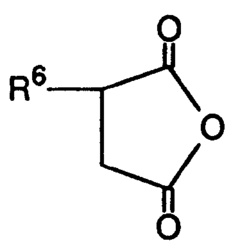

dans laquelle $R^6$ a la définition donnée ci-devant, avec un amino-alcool de formule $HO\text{-}R^1\text{-}NH_2$ comportant une fonction amine primaire et une fonction alcool de préférence primaire ou secondaire et le plus souvent une fonction alcool primaire. Ce composé succinique a, habituellement, une masse moléculaire moyenne en nombre d'environ 100 à 3 000, de préférence 200 à 2 000 et le plus souvent 500 à 1 500. Ces dérivés succiniques sont largement décrits dans l'art antérieur ; ils sont par exemple obtenus par l'action d'au moins une oléfine alpha ou d'un hydrocarbure chloré sur l'acide ou l'anhydride maléique. L'oléfine alpha ou l'hydrocarbure chloré utilisés dans cette synthèse peuvent être linéaires ou ramifiés, et comportent habituellement de 10 à 150 atomes de carbone, de préférence de 15 à 80 atomes de carbone et le plus souvent de 20 à 75 atomes de carbone dans leur molécule. Cette oléfine peut également être un oligomère, par exemple un dimère, un trimère ou un tétramère, ou un polymère d'une oléfine inférieure, ayant par exemple de 2 à 10 atomes de carbone, telle que l'éthylène, le propylène, le n-butène-l, l'isobutène, le n-hexène-i, le n-octène-l, le méthyl-2-heptène-1 ou le méthyl-2-propyl-5-hexène-1. Il est possible d'utiliser des mélanges d'oléfines ou des mélanges d'hydrocarbures chlorés.

A titre d'exemples d'anhydrides succiniques utilisés, on peut citer l'anhydride succinique, méthylsuccinique, éthylsuccinique, propylsuccinique, n-héxylsuccinique, n-octadécénylsuccinique, l'anhydride dodécénylsuccinique, n-tétradécylsuccinique et les anhydrides polyisobuténylsucciniques, souvent dénommés PIBSA, ayant une masse moléculaire moyenne en nombre telle que définie ci-devant.

A titre d'exemples d'amino-alcools utilisés on peut citer la monoéthanolamine, l'amino-1 propanol-3, l'amino-1 propanol-2, l'amino-1 butanol-4, l'amino-1 butanol-2, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Les phosphates d'amine utilisés dans les compositions selon la présente invention peuvent ainsi être obtenus par un procédé de préparation comportant les étapes suivantes :

a) on met en réaction, au moins un amino-alcool de formule $HO\text{-}R^1\text{-}NH_2$ avec au moins un dérivé succinique et de préférence un anhydride succinique de formule (V) ci-devant, à une température d'environ 30 °C à environ 250 °C dans des conditions de formation du cycle imide et d'élimination des produits volatils (eau ou alcool) formés. Le plus souvent la réaction est effectuée à une température d'environ 120 °C à environ 200 °C avec un rapport molaire d'amino-alcool sur dérivé succinique d'environ 0,9 : 1 à environ 1,2 : 1 et de préférence d'environ 1 : 1. Cette réaction peut être effectuée en l'absence de tout solvant, mais de préférence on utilisera un solvant ayant un point d'ébullition habituellement compris entre 30 °C et 250 °C et le plus souvent entre 65 °C et 210 °C. Ce solvant est habituellement choisi de manière à pouvoir permettre l'élimination de l'eau ou de l'alcool formé au cours de la réaction de formation du cycle imide. On utilisera en particulier un solvant permettant l'élimination de l'eau sous forme d'un azéotrope eau-solvant. On utilise habituellement un solvant organique tel que par exemple un hydrocarbure aromatique ou naphténo-aromatique. Plus particulièrement on peut utiliser le benzène, le toluène, les xylènes, l'éthylbenzène ou une coupe d'hydrocarbures telle que par exemple la coupe commerciale SOLVESSO 150 (190-209 °C) contenant 99 % en poids de composés aromatiques. Il est possible d'utiliser des mélanges de solvants, par exemple un mélange de xylènes. Cette étape a) peut dans la pratique être mise en oeuvre de la manière suivante : dans un réacteur contenant le composé dicarboxylique, et en maintenant la température entre 30 °C et 80 °C, on introduit peu à peu l'amino-alcool. On élève ensuite la température à 120 °C-200 °C en éliminant les produits volatils formés (eau ou alcools), soit par entraînement avec un courant de gaz inerte, soit par distillation azéotropique avec le solvant choisi ; la concentration en matière sèche est par exemple de 40 à 70 %, le plus souvent voisine de 50 % à 60 %. La durée de réaction, après addition des réactifs, est comprise par exemple entre 1 et 8 heures et de préférence entre 3 et 6 heures.

b) Soit l'imide-alcool de formule générale (IV) obtenu à l'étape a) dilué dans un liquide (de préférence un solvant) et de préférence dans l'un de ceux utilisables au cours de l'étape a), soit éventuellement après avoir ajusté la concentration en matière sèche, par exemple à environ 50 % en poids, la solution de l'imide-alcool obtenue à l'étape a) est progressivement mis en contact avec une suspension d'anhydride phosphorique dans un liquide qui est de préférence le même que celui dans lequel l'imide-alcool est dilué. Le contact est effectué dans des conditions classiques de formation des phosphates. Cette formation de phosphates de formule générale (I) s'effectue habituellement à une température d'environ 30 °C à environ 120 °C. La réaction est habituellement complète au bout d'environ 30 minutes à environ 2 heures. Bien que l'on puisse employer un excès de l'un ou de l'autre de ces composés par rapport à la stoechiométrie, on préfère habituellement être à la proximité de cette stoechiométrie, c'est-à-dire mettre en réaction environ 1 mole d'anhydride phosphorique pour 3 moles d'imide-alcool, ce qui évite d'avoir à éliminer l'excès de l'un ou de l'autre de ces composés. On obtient le plus souvent un mélange de phosphates comprenant principalement un phosphate ayant deux groupes hydroxyles libres et un phosphate ayant un groupe hydroxyle libre.

c) Au liquide contenant le phosphate de formule générale (I), ou le plus souvent un mélange de phosphates de formule générale (I), obtenu à l'étape b) on ajoute lentement au moins une amine de formule générale (II) et/ou (III) de préférence diluée dans un liquide qui est le plus souvent le même que celui employé à l'étape b). Cette addition est effectuée dans des conditions classiques de formation des sels d'amines par neutralisation partielle ou complète des fonctions acides du phosphate ou du mélange de phosphate obtenu à l'étape b). Cette formation du ou des phosphate(s) d'amine(s) s'effectue habituellement à une température d'environ 25 °C à environ 100 °C. La réaction est habituellement complète au bout d'environ 30 minutes à environ 2 heures. Bien que l'on puisse employer un excès de l'un ou de l'autre de ces composés par rapport à la stoechiométrie, on préfère habituellement être à la proximité de cette stoechiométrie, c'est-à-dire mettre en réaction environ 1 fonction amine par fonction hydroxyle que l'on souhaite neutraliser, du ou des phosphates, ce qui évite d'avoir à éliminer l'excès de l'un ou de l'autre de ces composés.

Parmi les phosphates d'amines décrits ci-devant, on utilise habituellement ceux dans lesquels le groupe $R^6$ comprend au moins 6, de préférence au moins 8, et le plus souvent au moins 10 ou même au moins 12 atomes de carbone. Le groupe $R^6$ est de préférence un groupe aliphatique monovalent; linéaire ou ramifié. Lorsque $R^6$ est un groupe aliphatique ramifié, les ramifications sont des groupes alkyles inférieurs (méthyle, éthyle, propyles ou butyles, et le plus souvent méthyle ou éthyle). De préférence le groupe $R^6$ comporte une chaîne carbonée ayant une partie linéaire d'au moins 6 atomes de carbone.

Les compositions selon l'invention comprennent en poids une proportion majeure d'une huile lubrifiante et une proportion mineure, suffisante pour améliorer les propriétés extrême-pression et anti-usure de ladite huile, d'au moins un phosphate d'amine décrit ci-devant. Ces compositions contiennent le plus souvent une concentration en phosphate d'amine de 10 à 250 000 grammes par tonne (g/t) d'huile lubrifiante. Les concentrations préférées vont de 2 000 à 150 000 g/t, et le plus souvent de 10 000 à 50 000 g/t. Cette concentration représente le plus souvent une concentration en phosphore de 10 à 25 000 ppm et de préférence de 50 à 5 000 ppm en poids.

Ces huiles lubrifiantes (ou les graisses) peuvent également contenir un ou plusieurs autres additifs, tels que par exemple des additifs améliorant l'indice de viscosité, des additifs d'abaissement du point d'écoulement, des additifs anticorrosion, des additifs antioxydants, des additifs antirouille, des additifs anti-mousse, des additifs dispersants, des additifs réducteurs de frottement et des additifs plus spécifiquement du type détergent, avec lesquels les phosphates d'amines de l'invention sont compatibles.

Pour formuler les compositions d'huiles lubrifiantes de l'invention, il est possible d'ajouter les additifs directement à l'huile par une simple opération de mélange. Il est cependant souvent avantageux de les introduire sous la forme de "solutions mères" préparés au préalable dans les solvants déjà mentionnés ci-devant. Les "solutions mères" peuvent contenir par exemple de 20 à 60 %, et le plus souvent environ 50 % en poids d'additifs.

Les exemples suivants illustrent l'invention. Ils ne doivent en aucune manière être considérés comme limitatifs. Les exemples 1 à 6 illustrent la synthèse des phosphates d'amines.

## Exemple 1

a) Première étape

Dans un ballon tricol de 2 litres, immergé dans un bain d'huile pourvu d'une agitation par barreau magnétique, d'un thermomètre, d'une ampoule d'addition et d'un Dean et Stark, on introduit 266 g d'anhydride n-dodécénylsuccinique (soit 1 mole) et le même poids de xylène. On ajoute lentement par l'ampoule d'addition 61 g d'aminoéthanol (soit 1 mole) dilué par la même quantité de xylène. On chauffe rapidement au reflux du xylène. Le reflux est maintenu pendant 3 heures. On recueille 17,5 g d'eau et 309 g de produit après évaporation du xylène. Ce produit est analysé par spectrométrie infrarouge et RMN du proton. Le spectre IR contient des bandes importantes à 1400 et 1717 $cm^{-1}$,caractéristiques du groupement imide et une bande intense à 3450 $cm^{-1}$, caractéristique du groupe hydroxyle. Le spectre RMN présente les pics attendus avec l'intensité voulue qui correspond au dodécénylsuccinimide de l'aminoéthanol.

b) Deuxième étape

Dans un ballon tricol de 2 litres, on introduit 47,3 g d'anhydride phosphorique (1/3 mole) en suspension dans le même poids de xylène. L'imide-alcool, obtenu à la première étape, dilué dans le même poids de xylène, est ajouté lentement par l'ampoule d'addition, sous atmosphère d'argon, pour éviter l'hydratation de l'anhydride phosphorique. Lorsque les deux réactifs sont complètement dissous à température ambiante, on chauffe légèrement (à 60° C dans le bain d'huile) pendant 45 minutes. On obtient un produit liquide homogène qui est analysé par infra-rouge et RMN du proton. Le spectre IR montre l'apparition d'une bande large vers 1010 $cm^{-1}$ correspondant à la vibration P-O-C. La RMN du proton permet de voir le déplacement

chimique des protons des phosphates à 9 ppm. L'acidité du produit est mesurée en utilisant une solution de potasse. La première acidité correspond à 102,9 g de potasse par kilogramme de produit et la deuxième acidité à 204,5 g de potasse.

c) Troisième étape

Au produit de la deuxième étape on ajoute lentement par l'ampoule d'addition, 555 g (soit 1 mole) d'une coupe d'amines grasses secondaires de formule $R^3R^4NH$ où $R^3$ et $R^4$ sont définis comme dans le cas de la coupe P du tableau I, diluée par le même poids de xylène. Cette addition permet une neutralisation complète des fonctions acides du mélange de produit obtenu à l'étape b). Par un léger chauffage, à environ 50°C, et sous agitation, durant 30 minutes, on obtient, après évaporation du xylène, un liquide, qui se solidifie à température ambiante, et qui est analysé par spectrométries IR et RMN. Le spectre IR ressemble au spectre du produit de la deuxième étape. Sur le spectre RMN, on observe une augmentation du nombre des protons de $CH_2$ et de $CH_3$ dus aux protons des amines. L'analyse des spectres de RMN du phosphore permet de vérifier qu'il ne se forme que des phosphates d'amines avec très peu de polyphosphates. Le produit obtenu dilué à 50 % en poids dans le xylène est appelé additif 1.

## Exemple 2

Les première, deuxième et troisième étapes de l'exemple 1 sont recommencées en remplaçant dans la première étape l'anhydride n-dodécénylsuccinique par l'anhydride tétrapropénylsuccinique. Le produit obtenu dilué à 50 % en poids dans le xylène est appelé additif 2.

## Exemple 3

Les 1ère et 2 ème étapes de l'exemple 1 sont reprises en remplaçant l'anhydride n-dodécénylsuccinique par un anhydride polyisobutènesuccinique (PIBSA) (le dosage des fonctions anhydride de ce produit montre que l'on a 0,78 fonction anhydride par kilogramme (kg)) dans le même appareil avec des quantités stoechiométriques d'anhydride (1 mole) et d'aminoéthanol (1 mole). La troisième étape est effectuée dans les mêmes conditions que celles décrites dans l'exemple 1 en utilisant la même coupe d'amine dans les mêmes proportions. Le produit obtenu dilué à 50 % en poids dans le xylène est appelé additif 3.

## Exemples 4 à 6

La procédure décrite dans les exemples 1 à 3 est répétée. Au cours de l'étape c) on ajoute lentement par l'ampoule d'addition, 277,5 g (soit 0,5 mole) d'une coupe d'amines grasses secondaires de formule $R^3R^4NH$ correspondant à la coupe P du tableau I, diluée par le même poids de xylène. Cette addition permet une neutralisation partielle des fonctions acides du mélange de produit obtenu à l'étape b) (neutralisation de la première acidité).

Les produits obtenus, dilués à 50 % en poids dans le xylène sont appelés additifs 4, 5 et 6.

## Exemple 7

Les additifs préparés dans les exemples 1 à 6 ci-devant sont évalués pour leurs propriétés extrême-pression et anti-usure dans une huile lubrifiante. L'huile minérale utilisée est une 100 neutral ayant les principales caractéristiques suivantes

Viscosité cinématique à 40 °C : 19,1 $mm^2/s$
Viscosité cinématique à 100 °C : 4,01 $mm^2/s$
Index de viscosité : 107
Point d'écoulement : - 15 °C
Teneur en soufre : 0,6 % en masse.

Les additifs sont ajoutés dans l'huile 100 neutral de manière à obtenir une concentration exprimée en phosphore donnée dans le tableau II ci-après. Les essais sont effectués sur machine 4 billes selon la norme ASTM D-2783. Les résultats figurent dans le tableau II ci-après. On constate que les compositions additivées selon la présente invention ont de meilleures propriétés anti-grippage et de meilleures propriétés anti-usure et extrême-pression que l'huile seule.

**TABLEAU II**

| PRODUITS | TENEUR EN PHOSPHORE PPM DANS L'HUILE | CHARGE DE GRIPPAGE daN | CHARGE DE SOUDURE daN | INDICE CHARGE/ USURE daN | DIAMETRE D'USURE EN mm APRES 1 HEURE SOUS: | | |
|---|---|---|---|---|---|---|---|
| | | | | | 40 daN | 60 daN | 80 daN |
| | 0 | 50 | 126 | 22,2 | 1,07 | 2,08 | 2,32 |
| ADDITIF 1 | 780 | 63 | 130 | 25,8 | 0,58 | 2,01 | 2,25 |
| ADDITIF 2 | 780 | 80 | 130 | 27,0 | 0,36 | 0,51 | 2,30 |
| ADDITIF 3 | 220 | 50 | 160 | 22,4 | 1,03 | 2,02 | 2,27 |
| ADDITIF 3 | 506 | 50 | 160 | 22,3 | 1,05 | 2,01 | 2,25 |
| ADDITIF 4 | 780 | 50 | 160 | 22,7 | 0,48 | 1,73 | 2,30 |
| ADDITIF 5 | 700 | 63 | 160 | 27,1 | 0,42 | 0,45 | 2,22 |
| ADDITIF 6 | 220 | 50 | 190 | 24,7 | 0,94 | 1,80 | 2,02 |
| ADDITIF 6 | 506 | 50 | 240 | 26,4 | 0,64 | 1,95 | 2,30 |

**Revendications**

**1 -** Composition d'huile lubrifiante comprenant une proportion majeure d'huile lubrifiante et une proportion mineure d'au moins un phosphate d'amine comportant un cycle imide terminal consistant en un produit résultant de la réaction, dans des conditions de formation d'un sel d'amine par neutralisation d'au moins une fonction acide, d'au moins un phosphate répondant à la formule générale (I) :

(I) 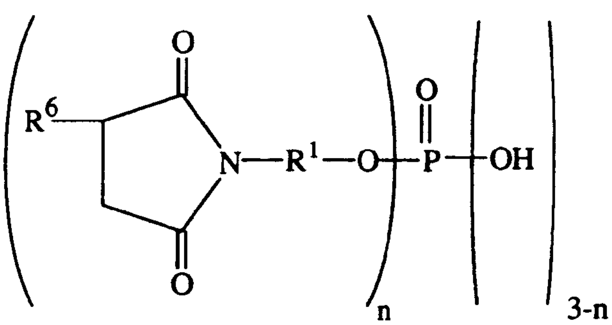

dans laquelle n est égal à 1 ou 2, $R^1$ est un groupe hydrocarboné divalent ayant de 1 à 32 atomes de carbone, $R^6$ représentent un atome d'hydrogène ou un groupe hydrocarboné ayant habituellement de 1 à 200 atomes de carbone, par au moins une amine répondant à la formule générale (II) ou (III) :

(II) 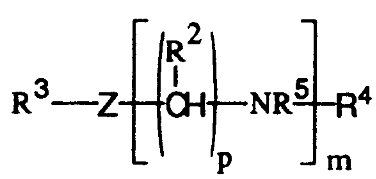

(III) 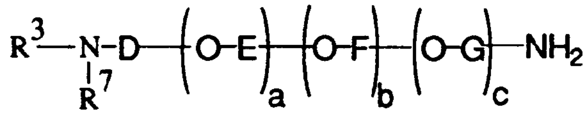

dans lesquelles $R^3$, $R^4$ et $R^5$, identiques ou différents, représentent chacun un atome d'hydrogène ou un groupe hydrocarboné ayant de 1 à 60 atomes de carbone, Z est choisi parmi les groupes -O-, et $-NR^7-$ dans lesquels $R^7$ représente un atome d'hydrogène ou groupe hydrocarboné ayant de 1 à 60 atomes de carbone, $R^3$ et $R^7$ pouvant former ensemble avec l'atome d'azote auquel ils sont liés un hétérocycle, chacun des groupes $R^2$ indépendamment représente un atome d'hydrogène ou un groupe hydrocarboné ayant de 1 à 4 atomes de carbone ; lorsque Z est $-NR^7-$, p est un nombre entier supérieur ou égal à 2 et m est zéro ou un nombre de 1 à 10 ; lorsque Z est -O-, p est un nombre entier supérieur ou égal à 1 et m est un nombre entier de 1 à 10 ; D, E, F et G, identiques ou différents, représentent chacun un groupe hydrocarboné divalent ayant de 2 à 6 atomes de carbone, a est un nombre entier de 1 à 60, b et c, identiques ou différents, sont chacun zéro ou un nombre entier de 1 à 50 et la somme a + b + c est un nombre entier de 1 à 60.

**2 -** Composition selon la revendication 1 dans laquelle le phosphate utilisé répond à la formule générale (I) dans laquelle $R^1$ est un groupe aliphatique saturé divalent, linéaire ou ramifié, ayant de 1 à 18 atomes de carbone ou un groupe aromatique, comportant éventuellement des substituants comme par exemple des groupes alkyles, et ayant de 6 à 24 atomes de carbone.

**3 -** Composition selon la revendication 1 ou 2 dans laquelle le phosphate utilisé répond à la formule générale (I) dans laquelle $R^1$ est un groupe aliphatique, saturé, divalent, comportant de 2 à 16 atomes de carbone, soit linéaire, soit ramifié avec des ramifications sous forme de groupes alkyles inférieurs.

**4 -** Composition selon l'une des revendications 1 à 3 dans laquelle le groupe $R^6$ représente un groupe aliphatique, linéaire ou ramifié ayant au moins 6 atomes de carbone et de préférence au moins 8 atomes de carbone.

**5 -** Composition selon l'une des revendications 1 à 4 dans laquelle l'amine employée est une amine de formule générale (II) dans laquelle m est égal à zéro, Z représente un groupe $-NR^7-$ dans lequel $R^7$ représente un atome d'hydrogène, $R^3$ représente un groupe alkyle ayant de 1 à 32 atomes de carbone, $R^4$ représente un atome d'hydrogène ou un groupe alkyle ayant de 1 à 32 atomes de carbone, et de préférence un groupe alkyle.

**6 -** Composition selon l'une des revendications 1 à 4 dans laquelle l'amine employée est une amine de formule générale (II) dans laquelle m est un nombre entier de 1 à 10, p est un nombre entier égal ou supérieur à 1, Z est -O-, $R^3$, $R^4$ et $R^5$, identiques ou différents, représentent chacun un atome d'hydrogène ou un groupe hydrocarboné ayant de 1 à 48 atomes de carbone et chacun des groupes $R^2$ indépendamment représente un atome d'hydrogène ou un groupe hydrocarboné ayant de 1 à 4 atomes de carbone.

**7 -** Composition selon l'une des revendications 1 à 4 dans laquelle l'amine employée est une amine de formule générale (II) dans laquelle m est un nombre de 1 à 10 et Z est un groupe $-NR^7-$ dans lequel $R^7$ représente un atome d'hydrogène ou un groupe hydrocarboné ayant de 1 à 32 atomes de carbone, de préférence un atome d'hydrogène ou un groupe alkyle ou alcényle, linéaire ou ramifié.

**8 -** Composition selon l'une des revendications 1 à 4 dans laquelle l'amine employée est une amine de formule générale (III) dans laquelle $R^3$ et $R^7$ représentent chacun un atome d'hydrogène, D, E, F et G, identiques ou différents, représentent chacun un groupe hydrocarboné divalent ayant de 2 à 4 atomes de carbone, a est un nombre entier de 1 à 60 et b et c sont égaux à zéro ou a est un nombre entier de 1 à 59, c est zéro ou un nombre entier tel que la somme a + c soit de 1 à 59 et b est un nombre entier de 1 à 50, la somme a + b + c étant dans tous les cas un nombre entier de 1 à 60.

**9 -** Composition comprenant en poids une proportion majeure d'une huile lubrifiante et une proportion mineure suffisante pour améliorer les propriétés extrême-pression et anti-usure de ladite huile d'au moins un phosphate d'amine selon l'une des revendications 1 à 8.

**10 -** Composition selon la revendication 9 comprenant de 10 à 250 000, et de préférence de 2 000 à 150 000 g/t d'au moins un phosphate d'amine selon l'une des revendications 1 à 8 .

Office européen des brevets

# RAPPORT DE RECHERCHE EUROPEENNE

Numero de la demande
EP 94 40 2126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 193 883 (FRANGATOS)<br>* le document en entier *<br>--- | 1-10 | C10M137/08<br>C10M137/04<br>C10M153/04<br>//C10N30:06 |
| A | US-A-4 014 803 (ROMINE)<br>* le document en entier *<br>--- | 1-10 | |
| A | GB-A-1 054 093 (LUBRIZOL)<br>* le document en entier *<br>--- | 1-10 | |
| A | WO-A-85 03709 (LUBRIZOL)<br>* le document en entier *<br>--- | 1-10 | |
| A | WO-A-83 03616 (EDWIN COOPER)<br>* le document en entier *<br>----- | 1 | |
| | | | **DOMAINES TECHNIQUES RECHERCHES (Int.Cl.6)** |
| | | | C10M |

Le présent rapport a été établi pour toutes les revendications

| Lieu de la recherche | Date d'achèvement de la recherche | Examinateur |
|---|---|---|
| LA HAYE | 23 Décembre 1994 | De La Morinerie, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)